# EUROPEAN PATENT SPECIFICATION

(11) **EP 3 649 855 B1**
(45) Date of publication and mention of the grant of the patent: **27.12.2023**
(21) Application number: 19198307.1
(22) Date of filing: 19.09.2019
(51) Int. Cl.: A01K 7/02, C02F 1/32

(54) **LIQUID DISPENSER FOR ANIMALS**
FLÜSSIGKEITSSPENDER FÜR TIERE
DISTRIBUTEUR DE LIQUIDE POUR ANIMAUX

(30) Priority: 19.09.2018 US 201862733393 P; 01.11.2018 KR 20180132642; 01.11.2018 KR 20180132644; 21.05.2019 KR 20190059514
(43) Date of publication of application: 13.05.2020
(73) Proprietor: LG Electronics Inc., Seoul 07336 (KR)
(72) Inventor: YOO, Hyunsun, Seoul 08592 (KR); CHUN, Jaehung, Seoul 08592 (KR); EUN, Yousook, Seoul 08592 (KR); KIM, Joogyeom, Seoul 08592 (KR); KIM, Sungkyung, Seoul 08592 (KR); KIM, Myongsun, Seoul 08592 (KR)
(74) Representative: Vossius & Partner Patentanwälte Rechtsanwälte mbB

(56) References cited:
- CN-U- 205 830 734
- CN-U- 207 870 035
- KR-A- 20170 003 154
- US-A1- 2008 078 330

## Description

### 1. Field

A liquid dispenser to supply, liquid, drinking water to a pet is disclosed herein.

### 2. Background

In recent years, the population of those raising a pet has increased, in addition attachment and interest pets. Like most animals, pets must drink water to survive and maintain a biorhythm. Since pets are often alone and since communication with their human owners is difficult, the demand for pet water dispensers or water supply devices has increased.

Also, flowing water has a larger surface area in contact with outside air than stored water or water sitting in a bowl, so flowing water may contain more oxygen. Pets are known to prefer fresh flowing water to water in a bowl due to the higher oxygen content. Accordingly, there is a need for pet water dispensers that provide flowing water.

During rainy seasons and winter, pets may not be able to go outside as much due to the weather. It is known that not only humans but also pets can experience seasonal depression or seasonal affective disorder (SAD) when they are less exposed to sunlight.

European Patent No. 3315022 A1, US Publication No. 2014/0053781, and Korean Patent No. 10-1825334 B1 disclose drinking bowls for pets. CN 207 870 035 U relates to a fountain-type pet drinking installation in accordance with the preamble of claim 1. CN 205 830 734 U discloses a special automatic drinking bowl for an animal in accordance with the preamble of claim 1.

The invention is specified in the independent claim. Further aspects of the invention are defined in the dependent claims.

### BRIEF DESCRIPTION OF THE DRAWINGS

FIG. 1 is a perspective view showing a pet water dispenser according to an embodiment;
FIG. 2 is a cross-sectional view of the pet water dispenser shown in FIG 1;
FIG. 3 is an exploded perspective view showing a space within a bottom plate, base, and lower wall;
FIG. 4 is an exploded sectional view showing a water supply plate and a water supply pipe;
FIG. 5 is a cross-sectional view of an illumination assembly shown in FIG. 4;
FIG. 6 is an exploded perspective view of the illumination assembly shown in FIG. 5;
FIG. 7 is a conceptual view illustrating an irradiation of light emitted from a light emitting diode (LED) and an organic light emitting diode (OLED);
FIG. 8 is a cross-sectional view of a water guide;
FIG. 9 is a conceptual diagram showing a state in which a pet drinks water; and
FIG. 10 is a block diagram showing an operation of a controller.

### DETAILED DESCRIPTION OF THE INVENTION

A pet water dispenser stores water in a water tank or storage chamber 10, and a pump 20 supplies stored water to a water supply plate or upper plate 30. The water from the water supply plate 30 is circulated back to the water tank 10.

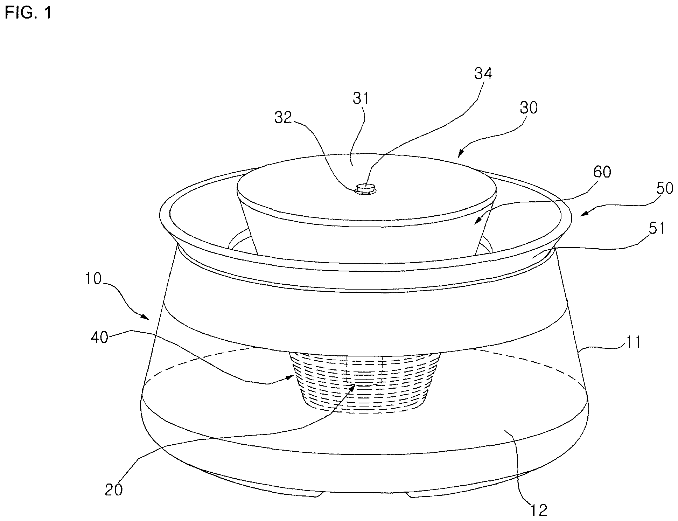

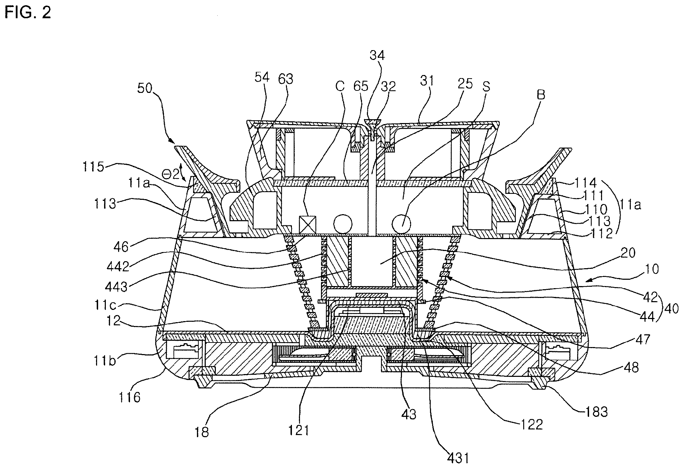

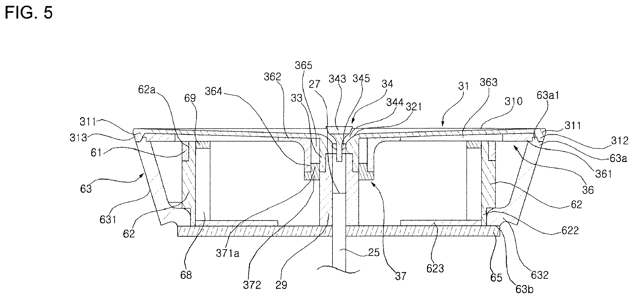

Referring to Figures 1 and 2, the pet water dispenser further includes an illumination assembly 60 that irradiates light toward an outside of the pet water dispenser. In addition, a water supply pipe 25 is connected to the pump and the water supply plate 30 to supply water to the water supply plate 30. The illumination assembly 60 will be described in further detail with reference to Figures 5-7.

The pump 20 is installed or located inside the water tank 10 to pressurize the water stored in the water tank 10. A filter or filter assembly 40 may be installed in the water tank 10 to filter foreign substances contained in the water before the water stored in the water tank 10 flows into the pump 20.

The water supply pipe 25 is connected to the pump 20 and the water supply plate 30 so that the water pumped by the pump 20 is transferred to the water supply plate 30. The water supply plate 30 may be provided to be higher than the water tank 10.

The water supply plate 30 may include an upper surface or plate body 31 having a water supply hole 32 formed therein. The water supply hole 32 may communicate with the water supply pipe 25. The water flowing along the water supply pipe 25 may be supplied to the plate body 31 through the water supply hole 32. The plate body 31 may have a flat upper surface 310. The water supplied through the water supply hole 32 may flow over the upper surface 310 of the plate body 31 toward an edge 311 of the plate body 31.

The plate body 31 is provided above the water tank 10. The water flowing along the upper surface 310 of the plate body 31 may drop downward from the edge 311 of the plate body 31 toward the water tank 10. The water tank 10 may have an opened upper side or an opened top. The water dropped from the water supply plate 30 is stored in the water tank 10.

A water receiver or a water guide 50 may be provided between the water tank 10 and the water supply plate 30. The water guide 50 may receive the water dropped from the water supply plate 30 and discharge the water back to the water tank 10. The water guide 50 may be arranged to be vertically spaced apart from the water supply plate 30. The water guide 50 may also be referred to as a splash guard or a drip tray.

The illumination assembly 60 may extend between the water supply plate 30 and the water guide 50. The illumination assembly 60 may partially form an outer appearance of the pet water dispenser. The illumination assembly 60 may irradiate light toward an outside and enhance an appearance of the pet water dispenser. The illumination assembly 60 may illuminate water falling from the water supply plate 30 to the water tank 10.

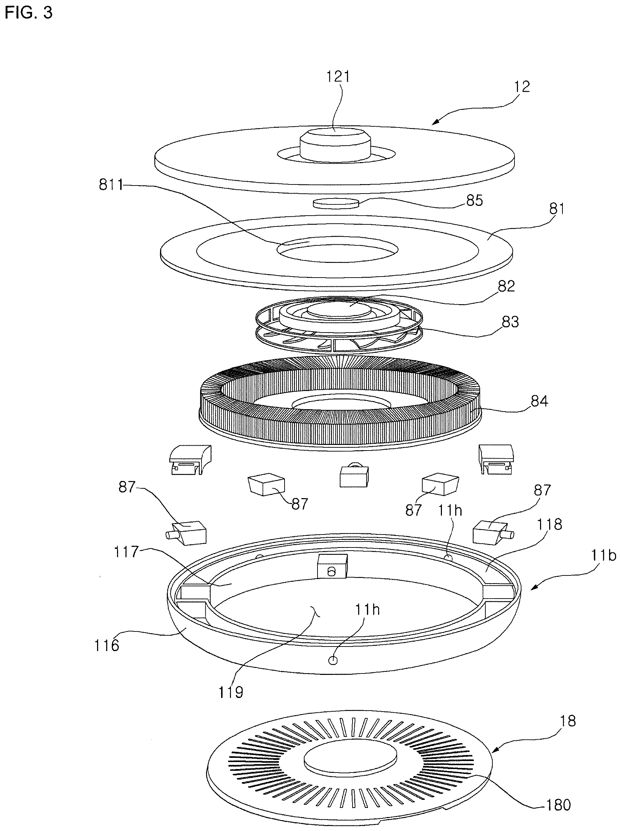

In addition, the pet water dispenser may include a power supply device and at least one sensor such as a water level sensor, a water temperature sensor 85 (e.g., a thermometer), a proximity sensor 87, a gyro sensor, and a pollution level or contamination sensor 82, which will be described in detail with reference to FIG. 3.

Referring to Figures 1-3, the water tank 10 may include a wall 11 having a main or middle wall 11c, and an upper wall 11a and a container support 11b coupled to upper and lower sides of the main wall 11c, respectively. A bottom plate 12 may be provided between the main wall and container support 11c and 11b. The main and upper walls 11c and 11a may form a container of the water tank 10 in which water is stored, while the container support 11b may provide a sealed space below the bottom plate 12 in which electronic devices or sensors (e.g., the water temperature sensor 85 or the proximity sensor 87) may be housed. The container support 11b may also be referred to as a container base or a lower wall.

The water tank 10 may include one container that stores water, as exemplified in the figures. In this case, the water stored in the water tank 10 may be supplied to the water supply plate 30 through the pump 20 and recovered to the water tank 10 again. Alternatively, the water tank 10 may include a first water container or tank in which purified water is stored, and a second water container or tank in which water dropped from the water supply plate 30 is stored. Hereinafter, the case where one water tank 10 and one container is provided will be described as an example for convenience of description, but the present disclosure is not limited thereto.

The container of the water tank 10 formed by the upper and main walls 11a and 11c may be formed in a cylindrical or truncated cone shape having a receding diameter from a bottom end of the main wall 11c to a top end of the upper wall 11a, but may be formed in various shapes without being limited thereto. The upper wall 11a may be formed to extend upward from the main wall 11c.

A first protruding plate 111 and a second protruding plate 112 may protrude from an inner surface of the upper wall 11a toward a center of the water tank 10. The first and second protruding plates 111 and 112 may extend in a horizontal direction and may be spaced apart from each other in a vertical direction. The second protruding plate 112 protrude further inward than the first protruding plate 111, and may have a length longer than a length of the first protruding plate 111.

An inner inclined surface or inner tank wall 113 inclined inward toward a center of the water tank 10 from a top end to a bottom end may be formed between inner ends of the first and second protruding plates 111 and 112. The inner tank wall 113 may extend between the inner ends of the first and second protruding plates 111 and 112, and may have a predetermined inclination. Lengths and positions of the first and second protruding plates 111 and 112 and/or an inclination of the upper wall 11a may be configured to set the predetermined inclination of the inner tank wall 113.

A wall portion or outer surface 110 of the upper wall 11a may extend in the same direction as the main wall 11c. The upper wall 11a may have a same or similar inclination as the main wall 11c to give a seamless appearance. The upper wall 11a may protrude upward from the main wall 11c.

The upper wall 11a may be formed with an upward protruding wall or extension 114 protruded upward from the first protrusion 111. A bumper 115 may be attached on the extension 114 and/or the first protrusion 111. The bumper 115 may be formed of an elastic material (e.g., rubber) and may be referred to as packing or cushioning.

The first protruding plate 111, along with the extension 114 may support an upper inclined surface 513 of an outer wall or outer guide wall 51 of the water guide 50, while the inner tank wall 113 may support a lower inclined surface 514 of the water guide 50. In addition, the bumper 115 may contact or support the upper inclined surface 513 of the outer guide wall 51. Details of the water guide 50 will be described later.

A tubular convex protrusion or protrusion 121 may be formed at a center of the bottom plate 12 so as to protrude upward. A ring-shaped groove or recess 122 may be formed on the bottom surface 12 to surround the protrusion 121. A lower filter cover 43 provided on a lower end of the filter assembly 40 to be described later may be inserted into the groove 122 so that the filter assembly 40 and the pump 20 may be stably supported in the water tray 10.

The container support 11b may have an outer circumferential surface 116 forming a lower outer surface of the water tank 10 and a mounting portion 117 provided on an inner side of the container support 11b opposite the outer circumferential surface 116. The outer circumferential surface 116 may curve downward from the lower end of the main wall 11c to have a convex curvature. The mounting portion 117 may form a space 119 between the bottom plate 12 and a base 18 provided below the bottom plate 12 and the container support 11b. The base 18 may separate the container support 11b from a floor or ground surface where the pet water dispenser may be placed.

The base 18 may include a base plate 180 covering a bottom of the space 119. Ventilation holes or openings 181 may be formed in the base plate 180. The ventilation holes 181 may also be referred to as vents. A plurality of ventilation holes 181 may be radially arranged along a circumferential direction of the base 18. Air may be suctioned into the container support 11b via the ventilation holes 181, and hot air may be exhausted out of an outermost portion of the ventilation holes 181. Alternatively or addition thereto, there may also be ventilation holes provided on a side or corner of the container support 11b through which hot air may exhaust.

The base 18 may include at least one base leg 183 protruding downward from the base plate 180. A plurality of base legs 183 may be spaced apart from each other in the circumferential direction of the base 18.

Pets may prefer to drink water between 10 and 20 degrees Celsius. The pet water dispenser may include a water temperature regulator in the space 19 to supply water of a predetermined temperature preferred by the pet.

The water temperature regulator may include a thermoelectric element 81 for controlling a temperature of the water stored in the water tank 10 and maintaining the water temperature at a predetermined temperature. The thermoelectric element 81 may be a Peltier device or a thermoelectric cooler (TEC). A motor 82 may be provided in a hollow center or hole 811 of the thermoelectric element 81. A heat radiating fan or fan 83 operated by the motor 82 may be installed below the motor 82. A heat sink 84 having a plurality of radiating fins provided on a heat diffusing or dissipation plate may be provided around the fan 83.

The water temperature sensor 85 may be installed in an inner space inside the protrusion 121 below the bottom plate 12. Alternatively or in addition thereto, the water temperature sensor 85 may at least partially protrude through the bottom plate 12 to directly contact water stored in the water container of the water tank 10. The water temperature sensor 85 may sense a temperature of the water in the water tank 10. If the temperature of the water sensed by the water temperature sensor 85 is not within a predetermined temperature range, the thermoelectric element 81 may be operated to cool the water or heat the water. Heat generated in the thermoelectric element 81 may be dissipated to an outside through the fan 83 and the heat sink 84.

The container support 11b may be formed with a mounting space or recess 118 having a predetermined width in a mounting portion 117. The mounting space 118 may form an opening or space between the outer circumferential surface 116 and an inner circumferential surface of the mounting portion 117. The thermoelectric element 81 may be provided over the mounting space 118 and the space 119 provided on an inner side of the mounting portion 117.

The proximity sensor 87 may be installed inside the space formed by the edge surface 118 of the container support 11b. A signal (e.g., laser) from the proximity sensor 87 may be transmitted through a signal transmission membrane provided in a hole 11h formed in the outer circumferential surface 116. The proximity sensor 87 may sense a pet within a predetermined distance range, and may continuously sense a position of the pet to sense whether the pet is approaching the pet water dispenser. There may be a plurality of proximity sensors 87. The plurality of proximity sensors 87 may be spaced apart from each other along a circumference of the edge surface 118. A plurality of proximity sensors 87 may sense a pet, respectively.

The filter assembly 40 may include a first filter 42 and a second filter 44, and may further include first and second ultraviolet (UV) filters or lights 47 and 48.

The first filter 42 may be formed in a cylindrical or truncated cone shape and may be made of a material having a considerable rigidity (e.g., metal such as stainless steel). A plurality of water inlets or through holes may be formed in a wall of the first filter 42. The wall of the first filter 42 may have a diameter that increases from a lower end to an upper end.

The first filter 42 may include a lower filter cover 43 provided on a lower end. The lower filter cover 43 may be formed to be convex upward so as to cover the protrusion 121 formed on the bottom plate 12. An inner surface of the lower filter cover 43 may have a shape to correspond to an outer surface contour of the protrusion 121. The lower filter cover 43 may have a flange 431 extending from its edge which may be inserted into the groove 122 formed around the protrusion 121. The first filter 42 may stably remain in a predetermined position without being moved horizontally or laterally in the water tank 10. There may further be a support cylinder provided below the second filter 44 in which the lower filter cover 43 is inserted.

The second filter 44 may be provided in a hollow portion (i.e., inside of) of the first filter 42. The pump 20 may be installed inside an inner space of the second filter 44. The second filter 44 may include an outer wall 442 formed with a plurality of through holes and an inner wall 443 spaced apart from the outer wall 442 and also having a plurality of through holes. A space formed between the inner and outer walls 442 and 443 may be filled with a filtration material 45 (e.g., carbon filter).

An upper filter cover 46 may be provided on upper ends of the first and second filter filters 42 and 44. The water supply pipe 25 may penetrate through the upper filter cover 46. The upper filter cover 46 may seal an upper portion of the pump 20 and the first and second filter filters 42 and 44. The first and second filters 42 and 44 and the upper filter cover 46 may be permanently or stably coupled to each other (e.g., adhered, fused, or welded). Alternatively, the first and second filters 42 and 44 and the upper filter cover 46 may be assembled to be detachable from each other by known engaging means (not shown) such as an arm, hook, or screw threads.

The pump 20 may be installed in a space formed inside the inner wall 443 of the second filter 44. Accordingly, a filtration performance and a pumping efficiency may be improved as compared with a case where the filter is provided on one side of the pump. Further, a separate structure to fix or hold the pump 20 at a predetermined position is not required.

The water that has passed through the first and second filters 42 and 44 may be suctioned into the pump 20 through the through holes formed in the inner wall 443 of the second filter 44 and discharged to the water supply pipe 25. The pump 20 may include a motor (not shown) therein. The motor may be a motor whose rotational speed may be varied. A control module or controller C, which will be described later, may control the rotational speed of the motor so as to vary the capacity or pumping rate of the pump 20 to pump the water stored in the water tank 10. When a large number of pets consume water at the same time (which may be determined via the plurality of proximity sensors 87), the controller C may speed up the rotation speed of the motor and increase the pumping capacity of the pump 20.

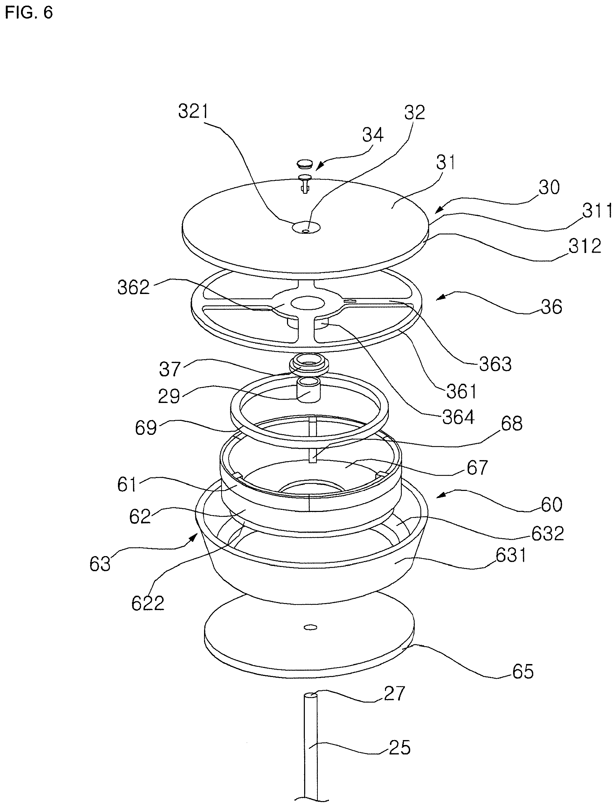

Referring to Figures 2 and 6, the water supply pipe 25 may extend in the vertical direction of the water tank 10. The water supply pipe 25 may include a water inlet 26 at a lower end and a water outlet 27 at an upper end. The water discharged from the pump 20 may flow into the water supply pipe 25 through the water inlet 26 and may be discharged through the water outlet 27.

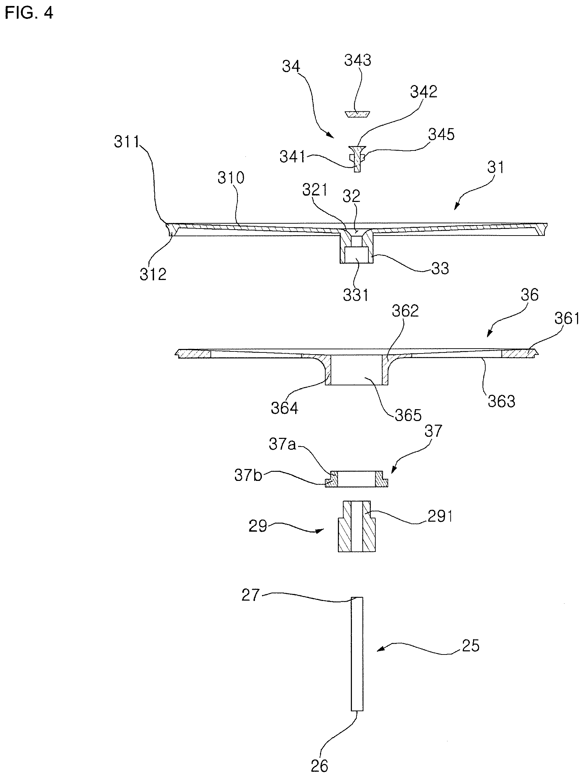

Referring to Figure 4, the water supply plate 30 may include the plate body 31 formed with the water supply hole 32, which may communicate with the water outlet 27 of the water supply pipe 25. A nozzle stopper or plug 34 may be partially inserted into the water supply hole 32. A plate support or plate frame 36 may be provided below the plate body 31. The plate support 36 may also be referred to as a support plate.

The plate body 31 may be provided above the water tank 10. Although the plate body 31 may be formed in the form of a disk, it may be formed in a polygonal shape or various other shapes. The upper surface 310 of the plate body 31 may be inclined upward toward an edge 311 of the plate body 31. A first boss 33 may protrude downward from a lower side of the plate body 31. The water supply hole 32 may be formed to extend through the first boss 33. A trumpet-shaped portion or upper portion 321 of the water supply hole 32 may be formed such that a diameter of the upper portion 321 gradually increases from a lower portion of the water supply hole 32 toward the upper surface 310. The water supply hole 32 is formed in the center of the water supply plate 31 in the embodiment of the present invention. The center means the center of the circle when the plate body 31 is a circular plate, and the center of gravity when it is a regular polygon. However, it may be formed in various other positions.

The upper surface 310 of the plate body 31 may have a constant or straight inclination or slope from the water supply hole 32 toward the edge 311. The edge 311 may be somewhat rounded or curved to encourage water to flow downward over the edge 311.

The constant inclination of the upper surface 310 may form a predetermined angle with a horizontal plane. The predetermined angle may be an acute angle. As an example, the predetermined angle may be greater than 0 degrees and less than 45 degrees so that water supplied to the plate body 31 flows collectively or quickly toward the edge 311. The upper portion of the water supply hole 32, along with the upper surface 310 of the plate body 31, may be gradually inclined upward so that the water supplied through the water supply hole 32 may be supplied with a driving force or speed with a greater horizontal component than a vertical component.

As exemplified in FIG. 4, the upper surface 310 of the plate body 31 may have an inclination angle of about 2 degrees. The water flowing along the upper surface 310 of the plate body 31 may maintain a constant thrust and momentum in the horizontal direction toward the edge 311. The water flowing over the plate body 31 may not drip down on a support 63 of the illumination assembly 60 provided below the plate body 31 and may instead form a water film or wall and fall off the edge 311 downward directly to the water guide 50. The support 63 may serve as a light diffuser, and may also be referred to as a light guide or a light guide plate. Accordingly, the pet water dispenser may supply a large area of falling water to the pet.

The illuminating assembly 60 may be provided inside the water wall formed by the water falling from the plate body 31 and may irradiate light toward the falling water. The light irradiated from the illumination assembly 60 may be refracted and reflected by the falling water, so that the pet water dispenser may be beautiful.

Referring to FIG. 5, an outer surface 313 of the plate body 31 may be inclined inward toward the center of the water tank 10 from the edge 311 toward a lower side. An outer surface 631 of the support 63, which will be described later, may be positioned below the outer surface 313 of the plate body 31. The outer surface 313 of the plate body 31 and the outer surface 631 of the light diffuser63 may have a same or similar inclination to create a seamless appearance.

The water leaving the edge 311 of the plate body 31 may not flow along the outer surface 613 of the support 63 but may instead drop directly from the edge 311. The plate body 31 may be formed of a plate having a constant thickness and may also include an edge protrusion or extension 312 protruding downward from the edge 311. An outer surface of the edge protrusion 312 may form the outer surface 313 of the plate body 31. Accordingly, the outer surface of the edge protrusion 312 may be inclined inward from the edge 311. The outer surface 631 of the support 63 may be positioned below the edge protrusion 312.

The edge protrusion 312 may be provided on an upper end 63a of thesupport 63, which will be described later. An inner circumferential surface of the edge protrusion 312 may be in contact with an outer circumferential surface of the plate support 36 and also with a projection 63a1 of the support 63 extending upward from the upper end 63a. The plate support 36 and the plate body 31 may be stably supported.

The plate body 31 may be made of metal (e.g., stainless steel) and may be formed to have a thin thickness. When the plate body 31 is made of stainless steel, corrosion may be prevented, and a luxurious appearance may be formed. The plate body 31 may alternatively be made of plastic and coated with metal.

As will be described later, the pet water dispenser may include the illumination assembly 60 installed or located below the plate body 31. The plate body 31 may be made of a transparent or semi-transparent material that diffuses or transmits light. Light from the illumination assembly 60 below the plate body 31 may be diffused and irradiated upward through the plate body 31, and the pet water dispenser may also function as a lamp or lighting device. Further, the plate body 31 may be integrally formed with the support 63 so that the water falling from the plate body 31 may not flow into an inner space of the illumination assembly 60 where light emitting devices (LEDs) or organic light emitting devices (OLEDs) are installed.

Referring back to FIG. 4, the diameter of an upper end or head 342 of the plug 34 may be larger than a diameter of the water supply hole 32. The head 342 may be provided higher than the edge 311 of the plate body 31. The head 342 may be formed with a head cover 343 extending upward.

A stem 341 of the plug 34 may be at least partially inserted into the water supply hole 32. The stem 341 may have a smaller diameter than the head 342 and the water supply hole 32. A plurality of circumferentially spaced retaining pieces or ribs 345 projecting outward from the stem 341 may prevent the stem 341 from being fully inserted into the water supply hole 32. Alternatively, the plug 34 may be a float which moves up and down based on water flowing out of the water outlet 27 of the water supply pipe 25, and the float may completely close the water supply hole 32 when the pump 20 is turned off. The ribs 345 may be captured within the water supply hole 32. The water supply hole 32 may include grooves to allow the ribs 345 to move up and down based on water being pumped when the plug 34 serves as a float.

The stem 341 of the plug 34 may be inserted into the water supply hole 32 such that the head 342 and the head cover 343 are spaced upward from the water supply hole 32. A water outlet or port 344 may be formed between the head cover 343 and/or head 342 of the plug 34 and a portion of the plate body 31 that forms the upper portion 321 of the water supply hole 32. The water outlet 344 may be ring-shaped with the plug 34 at a center. The plurality of ribs 345 may contact a portion of the plate body 31 that forms the water supply hole 32 to support the plug 34 in a predetermined position in the water supply hole 32.

The plate support 36 may support the plate body 31. The plate body 31 may be detachably seated on the plate support 36. In addition, a sealing ring 37 may connect the plate body 31 and the plate support 36. The sealing ring 37 may be made of an elastic (e.g., rubber) and may also be referred to as a packing ring.

The plate support 36 may include an outer ring 361 abutting against a bottom surface of the plate body 31 and the edge projection 312 and a hub or inner ring 362 located at a center of the plate support 36. A plurality of spokes 363 (see also FIG. 6) may extend between the outer and hub rings 361 and 362. A second boss 364 may protrude downward from the hub ring 362.

The first boss 33 may be inserted into a hole 365 formed in the hub ring 362 and in the second boss 364. The sealing ring 37 may be inserted between the second boss 364 and the first boss 33.

A light support or base 62 and the support 63 may be provided below the plate support 36 to support the plate support 36. Details of the support 63 and light base 62 will be described later with reference to Figures 5-7.

The sealing ring 37 may be formed of an elastic body or member (e.g., of a rubber material). The sealing ring 37 may be at least partially press-fitted between the first boss 33 and the second boss 364 to couple the plate body 31 and the plate support 36 together. An upper portion 37a of the sealing ring 37 may be press-fitted into the hole 365 of the second boss 364 to be press-fitted between the first and second bosses 33 and 364. The first boss 33 may be at least partially press-fitted into a hole formed in the sealing ring 37 and inserted into the second boss 364. The first boss 33 and the second boss 364 may be coupled by an elastic force of the sealing ring 37.

The sealing ring 37 may have a lower portion 37b having an outer diameter larger than an outer diameter of the upper portion 37a. An inner diameter of the upper portion 37a may be equal to an inner diameter of the upper portion 37b. The lower portion 37b may support a bottom surface of the second boss 365 and may support the plate support 36.

The water supply hole 32 formed in the first boss 33 and the plate body 31 may be formed with a hole 331 extending downward. A water outflow member or coupler 29 may be inserted into the hole 331.

Referring to Figures 4 to 6, the coupler 29 may provide a passage or hole to connect the water supply pipe 25 and the plate body 31. The water supply pipe 25 may be at least partially inserted into the water outflow member and arranged such that the water outlet 27 communicates with the water supply hole 32.

The coupler 29 may be formed in a cylindrical shape having a length in the vertical direction. The passage or hole of the coupler 29 may communicate with a lower portion of the water supply hole 32. The lower portion of the water supply hole 32 may have a smaller diameter than the upper portion 321 of the water supply hole 32.

The water supply pipe 25 may penetrate a partition plate 65 described later and may be inserted into a lower side of the passage communicating with the water supply hole 32 formed in the coupler 29. An upper portion 291 of the coupler 29 may be inserted into the hole 331 formed in the first boss 33 of the plate body 31.

A UV (Ultraviolet) filter or light may be provided in the passage formed in the coupler 29 to sterilize water that passes through the water supply pipe 25 or is discharged from the water outlet 27. The UV filter may include a UV LED (Ultraviolet Light Emitting Diode) and a diffusion plate. The coupler 29 may be referred to as a UV filter or light or a third UV filter or light. The coupler 29 may be installed to cover the water outlet 27, and the passage of the coupler 29 may extend higher than the water outlet 27. The UV filter may directly sterilize water discharged from the outlet 27 by irradiating ultraviolet rays.

Referring to Figures 2 and 5-7, the illumination assembly 60 may irradiate light toward an outside, thereby alleviating seasonal depression or SAD of the pet. The illumination assembly 60 may illuminate the water falling from the water supply plate 30 or the plate body 31, and may attract a pet to drink water.

The illumination assembly 60 may be installed between the water tank 10 and the plate body 31, and may be arranged below the plate body 31 and inside the water wall formed from the water supply plate 30. The support 63, which may form an outer surface or side of the illumination assembly 60, may have a diameter smaller than a diameter of the water supply plate 30. The illumination assembly 60 may illuminate the water falling from the plate body 31 from an inside of the water wall, and the light emitted from the illumination assembly 60 may be refracted and reflected by the falling water. Furthermore, the illumination assembly 60 may be provided below the water supply plate 30 to be within the water wall to prevent the glare.

When the illumination assembly 60 is installed at a lower portion of the pet water dispenser, the amount of light irradiated to the pet may be insufficient to alleviate the seasonal depression or SAD of the pet. In addition, light to be irradiated may be insufficient to perform a function as a lighting device. The illumination assembly 60 is provided above the water tank 10. Thus, an appropriate amount of light may be illuminated to the pet to perform light therapy and serve as a lamp while preventing the glare.

A partition plate 65 may partition the illumination assembly 60 and the water tank 10 to protect an inner space of the illumination assembly 60 from water. The illumination assembly 60 may include a light emitter or light device 61 to emit light to an outside of the pet water dispenser, a light support or base 62 on which the light device 61 may be installed, and the support 63 provided on an outside of the light base 62. The light base 62 may also be referred to as a light mount.

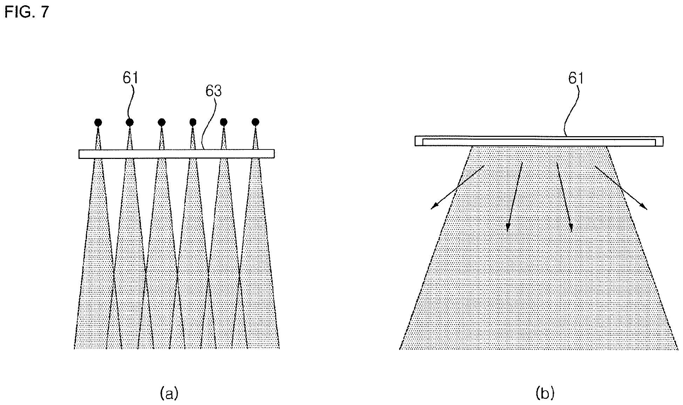

The light device 61 may be fabricated from at least one light emitting diode (LED) as shown in FIG. 7 (a). The light device 61 may be made of a plurality of light emitting diodes. The plurality of LEDs may be attached to the light base 62 to form an array of predetermined shapes. The light device 61 may be inserted and attached to an inwardly recessed portion or step portion 62a formed on an outer surface of an upper side of the light base 62.

Referring to FIG. 7(a), each of the plurality of light emitting diodes (LEDs) may form a point light source, and the light emitted from the light emitting diodes (LEDs) may have a strong focus of light within a narrow area. The light device 61 extend around the outer surface of the light base 62, and the light may be irradiated to an outside through the support 63 in a relatively uniform manner.

As shown in FIG. 7 (b), the light device 61 may additionally or alternatively include at least one organic light emitting diode (OLED). The organic light emitting diode OLED may be fabricated to form a planar surface. The organic light emitting diode (OLED) may form a planar light source and may uniformly irradiate light over a wide area. Therefore, it is possible to reduce glare.

The organic light emitting diode (OLED) may be thin and warped or curved. The light device 61 may be made of a ring-shaped organic light emitting diode (OLED). There may be a plurality of arc-shaped or band-shaped light devices 61 provided adjacent to each other to form a single ring-shaped light device 61 on the light base. For example, a ring-shaped organic light device 61 may be formed by connecting three arc-shaped organic light emitting diodes (OLEDs) having a radius of curvature of 120 degrees.

Light emitted from the organic light emitting diode (OLED), and has a spectrum of light most similar to natural light than other lighting apparatuses currently developed. Accordingly, when the light device 61 is made of an organic light emitting diode (OLED), it is possible to alleviate seasonal depression.

The organic light emitting diode (OLED) may generate less blue light (i.e., light of low wavelength between 380 nm and 500 nm having the most energy among visible rays). Blue light is effective in increasing concentration and arousal, but it disturbs the secretion of the melatonin hormone, causing sleep disorders. In addition, blue light causes dry eye syndrome and macular degeneration. The light body 61 may be fabricated as an organic light emitting diode (OLED), thereby mitigating seasonal depression and preventing disadvantages such as sleep disorder.

In addition, the organic light emitting diode (OLED) generates less heat due to lighting than other light emitting diodes. Accordingly, the light device 61 may be made of an organic light emitting diode (OLED), and a maintenance of the temperature of the water by the water temperature regulator (the thermoelectric element 81, the heat sink 84, the fan 83, and the motor 82) may consume less power.

Referring back to Figures 5-6, the light base 62 may be provided inside the support 63 and extend between the plate body 31 and the water guide 50. A recess or step portion 622 may be formed inwardly at the outer surface at a lower side of the light base 62. The lower end 63b of the support 63 may be protrude inward to insert into the recess 622 of the light base. The support 63 and the light base 62 may then together be placed on the partition plate 65.

The light base 62 may include a reinforcing rib 68 and a reinforcing ring 69 provided on an inner surface. The reinforcing ring 69 may be provided below the plate support 36 to support the plate support 36. The reinforcing ribs 68 may be provided below the reinforcing rings 39 to support the reinforcing rings 69.

A circuit board 67 on which a processor to control a light emission of the light device 61 may be provided on the partition plate 65 and extend from the outer surface at the lower side of the light base 62. The circuit board 67 may be a printed circuit board (PCB). The circuit board 67 may be connected to the controller C described later.

The reinforcing ribs 68 may form a housing to accommodate electric wires in an inner space between an outer surface of the light support 62 and an outer surface of the reinforcing ribs 68. For example, an electric wire connecting the circuit board 67 and the light device 61 may be housed in the space between the reinforcing ribs 68 and the light base 62. The reinforcing ring 69 may be provided as a housing holder so as to support the light base 62 while fixing the reinforcing rib 68 to the light base 62.

The light emitter support 62, the support 63, and the partition plate 65 may be welded, bonded or fused together, or they may be assembled to be detachable from each other.

The support 63 may form an outer edge of the illumination assembly 60. The support 63 may be formed in a trumpet or truncated cone shape having a diameter that increases from the lower end 63b to the upper end 63a. The support 63 may extend between the plate body 31 and the water guide 50 described later. The support 63 may be placed on an inner guide wall 53 of the water guide 50 and the partition plate 65 to be stably supported above the water tank 10.

The upper end 63a of the support 63 may be in contact with the edge protrusion 312 of the plate body 31 and the outer ring 361 of the plate support 36. The lower end 63b of the support 63 may be provided on the partition plate 65. Alternatively, the lower end 63b of the support 63 may be provided on an upper side of a 54 of the water guide 50 described later.

The outer surface 631 of the support 63 may form an inclined surface that is inclined gradually inward from the edge 311 of the plate body 31 toward the lower end 63b of the support 63. Based on the flow of water pumped by the pump 20, water dropped from the edge 311 of the plate body 31 may fall vertically without flowing along the support 63. The dropping of water creates a waterfall to simulate running water, which is pleasing for animals.

The upper end 63a of the support 63 may be formed in a shape corresponding a shape of the lower surface of the edge 311 of the plate body 31. The upper end 63a of the support 63 may include an upward projection or extension 63a1 protruded upward. The projection 63a1 may protrude upward at a position spaced inwardly from an upper end of the outer surface 631 by a distance equal to a width of a lower end of the edge protrusion 312. A length of the projection 63a1 and a length of the edge protrusion 312 may be the same. The outer surface of the projection 63a1 may contact an inner surface of the edge protrusion 312, and the lower end of the edge protrusion 312 may be provided on the upper end 63a of the light diffuser to be adjacent to the projection 63a1. Water may not seep into the illumination assembly 60, and an inner space of the illumination assembly 60 may be sealed.

The support 63 may have an inwardly projecting portion or inward protrusion 632 protruding inward from the lower end 63b. An inner end of the inward protrusion 632 may protrude downward to be in contact with the partition plate 65. A portion of the support 63 protruding downward and/or outward from the inward protrusion 632 may be inserted into and engaged with a groove 541 formed in an upper side of the guide 54 of the water guide 50. An upper portion of the illumination assembly 60 may be coupled to the plate body 31 while a lower portion thereof is coupled to the partition plate 65 to form a space that is sealed inside.

The partition plate 65 may be supported by the water guide 50 and may support the illumination assembly 60 and the coupler 29. The partition plate 65 may be placed on the guide 54 of the water guide 50.

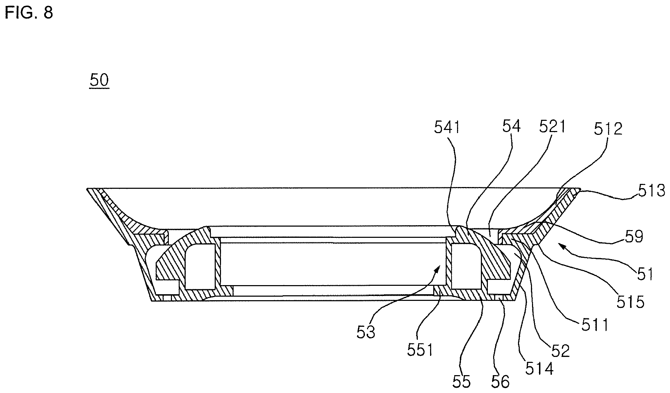

Referring to Figures 2 and 8, the water guide 50 may receive the water falling from the water supplying plate 30 and guide the water to the water tank 10. The water guide 50 may be arranged to be below and spaced apart from the plate body 31, and the illumination device 60 may be provided between the water guide 50 and the water supply plate 30.

The water guide 50 may include an outer guide wall 51 forming an outer rim and an inner guide wall 53 forming an inner rim. A drain passage 521 may be formed between the outer and inner guide walls 51 and 53. A bottom wall 55 may extend between lower ends of the outer and inner guide walls 51 and 53 and may include a discharge hole 56 communicating with the drain passage 521 to guide water dropped from the plate body 31 and flowing down the drain passage 521 into the water tank 10. The discharge holes 56 may be formed in one or more ring-shaped holes or circular holes formed along a circumferential direction of the bottom wall 55.

The inner guide wall 53 may be formed with a guide 54 protruding toward the outer guide wall 51 and inclined downward. The water dropped from the plate body 31 may be guided downward along the guide 54. The guide 54 may be formed such that an upper surface thereof is rounded.

An upper side of the guide 54 may support a lower side of the support 63. A groove 541 may be formed on the upper side of the guide 54 so that an edge of the partition plate 65 may be positioned in the groove 541, and the support 63 may be provided between the upper side of the guide 54 and the partition plate 65.

An upper or inner portion of the guide 54 adjacent to the groove 541 may be formed to have a smaller diameter than a diameter the plate body 31, and a lower or outer portion of the guide 54 may have a larger diameter than the diameter of the plate body 31 when viewed from above. The water dropped from the plate body 31 may be guided by the guide 54 to the water tank 10.

The support 63, the water guide 50, and the partition plate 65 may be assembled to be detachable from each other by a known method, or may be fixedly connected to each other by a method such as adhesion, welding, or fusion. When the water guide 50 is assembled to be detachable from the support 63, the water guide 50 may be replaced with another water guide having a different shape or height.

The outer guide wall 51 of the water guide 50 may have a protrusion 511 on an inner side thereof protruding toward the guide 54. An inner surface 512 of the outer guide wall 51 may extend upward from the protrusion 511 to be an inclined surface. The drain passage 521 may be narrower between the protrusion 511 and the guide 54. The water dropped from the plate body 31 to the water guide 50 may stay on the guide 54 and the protrusion 511 for a while and then flow downward through the narrower portion drain passage 521. The protrusion 511 may serve as an additional filter to block large foreign substances from continuing down the drain passage 521.

A reflection plate 59 formed of a material having a high reflectivity may be provided on the inner surface 512 and an upper surface of the protrusion 511. The reflection plate 59 may be made of a metal having high reflectance such as stainless steel or coated plastic. The light irradiated from the illumination assembly 60 may be reflected by the reflection plate 59 to irradiate light at various angles.

The reflection plate 59 may be formed to incline gradually outward from a lower side to an upper side along with an inclination of the inclined surface 513. The water falling from the plate body 31 may not scatter or splash outside of the water guide 50. Furthermore, the outer guide wall 51 may be formed to be larger than the inner guide wall 53 and the upper wall 11a of the water tank 10. A predetermined angle Θ1 may be formed between the upper wall 11a and the outer guide wall 51. The predetermined angle Θ1 may be, for example, 120 degrees.

The outer guide wall 51 of the water guide 50 may be positioned lower than the plate body 31 so that the pet may easily drink water. The outer guide wall 51 of the water guide 50 may be located lower than the upper end 63a of the support 63 so that the light emitted by the light device 61 may be easily seen from an outside through the support 63.

An outer surface of the outer guide wall 51 may be formed with the upper and lower inclined surfaces 513 and 514. A step portion 515 may be formed between the upper and lower inclined surfaces 513 and 514. The lower inclined surface 514 may be supported on the inner tank wall 113 of the water tank 10. The step portion 515 of may be placed on a corner of the first protruding plate 111 formed on the upper wall 11a. The upper inclined surface 513 of may be held in contact with the bumper 115 attached on the upper wall 11a. The water guide 50 may be firmly provided above the water tank 10.

The support 63 and the partition plate 65 may be held in contact with the water guide 50. The light base 62 may be provided on the partition plate 65. The plate body 31 may be provided on the support 63 and the light base 62. As a result, the plate body 31 may be firmly supported above the water tank 10 so that water may fall into the water tank 10.

The bottom wall 55 of the water guide 50 may have an extension or protruding jaw 551 protruding inward from the inner guide wall 53. The extension 551 551 may be positioned above an edge of the upper filter cover 46.

Referring back to FIG. 2, a sealed space or chamber S, which is sealed from the container storing water of the water tank 10, may be formed between the upper filter cover 46, the inner guide wall 53, and the partition plate 65. An auxiliary battery B and the controller C may be installed in the space S. The auxiliary battery B may be charged via external power applied to a docking station and transmitted to the auxiliary batter B in the space S via a wireless power transfer (WPT) method including wireless power receivers and transmitters and/or transceivers.

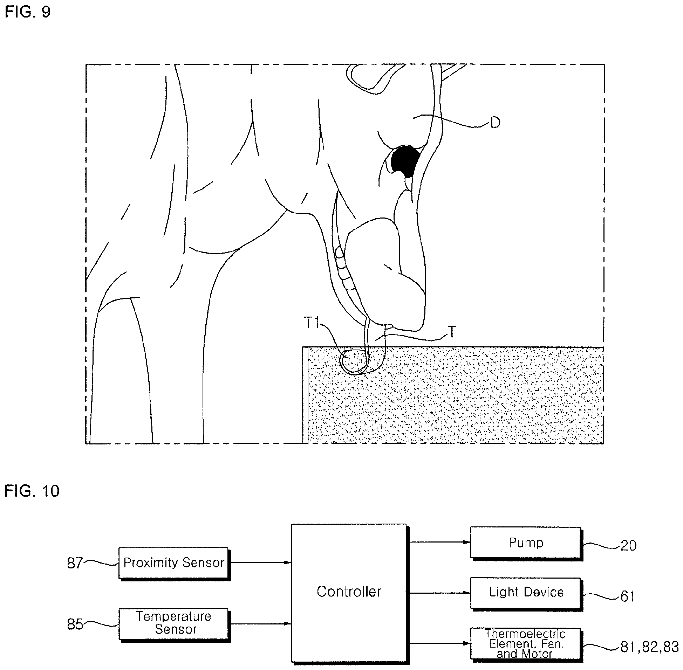

Referring to FIG. 9, when a dog D is drinking water, its tongue T may be curled backward to form a space T1 on a rear of the tongue T. Water may be filled in and stored in the space T1, and the dog D may continue to keep its tongue T curled while lifting its tongue T to its mouth to pour out the stored water and drink the water kept in the space T1. A pet water dispenser dispensing water over a shallow surface and forcing a pet to use a front surface of its tongue may not be suitable for dogs. When a water supply plate is inclined downward, a depth of the water flowing along the plate is shallow, which makes it difficult to drink water using a rear space T1 of the tongue T.

The pet water dispenser according to an embodiment is provided with the pump 20 inside the water tank 10 to supply water to the plate body 31 provided at a higher position than the water tank 10 through the water supply pipe 25. The plate body 31 may be formed to be inclined upward from the water supply hole 32 toward the edge 311. The water supplied to the water supply plate 31 drops from the edge 311 of the water supply plate 31. The water may flow over the plate body 31, which may temporarily store water because water may pool in a center of the plate body 31 due to an upward inclination of the plate body 31. Water pooled in the center of the plate body 31 may be consumed, along with water falling off the plate body 31. Further, since water falls from the plate body 31 as a water wall or rim having a flat surface, a large number of pets may drink water at the same time without any crowding or other inconveniences.

Furthermore, the pet water dispenser according to an embodiment may include OLEDs to treat SAD or seasonal depression during rainy or cold seasons. When the pet water dispenser is operated, the light device 61 may be turned on and water may drop from the plate body 31 toward the water tank 10. The support 63 may be formed to be smaller than the plate body 31 when seen from above, so that light emitted by the light device 61 may be seen through or between the falling water.

The light device 61 may include an organic light emitting diode (OLED) as described above to alleviate seasonal depression of the pet. Further, the device 61 may be formed to have a small thickness, and may be formed in a belt-like or arclike shape along the light base 62.

Referring to FIG. 10, a control module or controller C to control an operation of the pump 20, the light device 61, and at least one sensor (e.g., proximity sensor 87) may be provided. There may be a plurality of proximity sensors 87 spaced apart from each other along a periphery of the pet water dispenser to detect when a pet is present within a predetermined distance range, and also to continually sense a position of the pet to detect whether the pet is approaching the pet water dispenser.

The controller C may receive a signal from the proximity sensor 87 to determine whether the pet is approaching the pet water dispenser within the predetermined distance range. When the controller C determines that the pet is present (or alternatively is approaching) within the predetermined distance range, the controller 20 may operate the pump 20. The controller C may stop the operation of the pump 20 when it is determined that the pet is not present (or alternatively is not approaching) within the predetermined distance range. It is possible to control the pump 20 to be operated only when the pet continues to approach by a certain increment within the predetermined distance.

The controller C may turn on the light device 61 and operate the pump 20 when at least one of the plurality of proximity sensors 87 senses a pet. The controller C may turn off the light device 61 if the plurality of proximity sensors 87 does not sense a pet for more than a predetermined time period during an operation of the light device 61. The controller C may also stop the operation of the pump 20 when the plurality of proximity sensors 87 does not sense the pet for more than the predetermined time period during an operation of the pump 20.

The controller C may control the light device 61 to be turned off when the pump 20 is turned off after operating. Alternatively, even when the pump 20 is not operating, the light device 61 may be turned on by the controller C so as to serve as a lighting device or lamp.

When the controller C determines that a plurality of pets have approached the pet water sensor based on signals received from the plurality of proximity sensors 87, the controller C may increase the pumping capacity or rate of the pump 20 so as to correspond to the number of approaching pets. A sufficient amount of water may be supplied to the pets. The controller C may also control the thermoelectric element 81, motor 82, and fan 83 to regulate the temperature of the water of stored in the water tank 10.

Embodiments disclosed herein may be implemented as a liquid dispenser that supplies drinking water to an animal such as a pet. However, embodiments disclosed herein are not limited to pets. For example, the liquid dispenser may be used in a zoo to supply drinking water to animals kept in a zoo, research areas, wildlife preservation areas, etc.

Embodiments disclosed herein may be implemented as a water dispenser or pet water dispenser which may arouse curiosity and interest in a pet to induce the pet to drink water flowing from the water dispenser. The water dispenser may alleviate seasonal depression or seasonal affective disorder (SAD) of pets due to a lack of going out or a lack of sunshine. The water dispenser may provide a lighting device or an illumination assembly that reduces glare and protects the eyes of the pets. The water dispenser may be beautiful in appearance and can function as a lighting device or lamp to improve the dignity or mood of the indoor space.

The water dispenser may prevent or reduce the risk of insomnia from being caused by an illumination assembly or device. The water dispenser may easily keep a water temperature from rising due to a configuration of the illumination assembly. The water dispenser may stably support a water supply plate even if the water supply plate to which water is supplied is provided above the water tank.

The problems solved by the present disclosure are not limited to the above-mentioned problems, and other problems not mentioned can be clearly understood by those skilled in the art from the following description.

A pet water dispenser according to an embodiment may include a water tank to store water and a lighting device or illumination assembly to irradiate light toward an outside. The illumination assembly may include at least one light emitter (or light emitting body) or a light device to emit light to the outside of the pet water dispenser. The light device may include an organic light emitting diode (OLED). The light device may be formed in a ring shape. The light device may be formed in a ring shape having a virtual line perpendicular to a ground as a central axis.

A pump may feed water stored in the water tank. The pump may be installed inside the water tank. A control module or a controller may control an operation of the pump and a lighting of the device. The controller may control the operation of the pump and the lighting of the light device in conjunction with each other. The controller may control the operation of the pump and the lighting of the light device so that light illuminates when the pump is operated and the light device is turned off when the pump stops operating.

The pet water dispenser may include at least one proximity sensor to sense a pet within a predetermined distance range. A plurality of proximity sensors may be provided. The plurality of proximity sensors may be spaced apart from each other along a periphery of the pet water dispenser.

The controller may turn on the light device when the proximity sensor senses the pet. The controller may turn on the light device when at least one of the plurality of proximity sensors senses the pet. The controller may turn off the light device if the plurality of proximity sensors do not sense the pet for more than a set or predetermined time during a lighting of the light device.

A water supply pipe may be connected to the pump and a water supply unit or plate. The water supply pipe may be connected to the pump so that water can be transferred. The water supply unit may include a water supply plate or a plate body. The water supply plate may have a water supply hole communicating with the water supply pipe. The water supply plate can supply water from the water supply pipe through the water supply hole.

The water supply unit may be provided higher than the water tank. The water supply plate may be spaced upward from the water tank. The water tank may be provided below the water supply unit. The water tank may be opened at an upper side. The water supplied to the water supply unit can drop from the water supply unit. The water tank may store water falling from the water supply unit.

The water supply plate may have an upper surface through or over which water supplied through the water supply hole flows. The water supplied to the water supply plate can flow toward the edge of the upper surface and drop from the edge of the upper surface. The water reaching the edge of the upper side can fall downward from the edge toward the water tank.

At least some of the edges of the upper side may be located on the same plane perpendicular to a gravitational or vertical direction. The edges of the upper surface may be positioned on the same plane perpendicular to the gravity direction. The water falling from the edge can form a water film or water fall.

The illumination assembly may be installed below the water supply unit. The illumination assembly may be installed above the water tank. The illumination assembly may be installed between the water tank and the water supply unit. The illumination assembly can illuminate water falling from the water supply unit.

The illumination assembly may be installed below the water supply plate. The illumination assembly may be provided inside the water supply plate when viewed from above the water supply plate. The illumination assembly can illuminate water falling from the water supply plate.

The illumination assembly may include a light guide plate or a light diffuser to diffuse light emitted from the light device. The light guide plate may form an appearance of the illumination assembly. An upper end of the light guide plate may be provided in contact with an edge of the water supply plate. The upper end of the light guide plate and a lower side of the edge of the water supply plate may be formed to correspond to each other. An upper side of the light guide plate and a lower side of the edge of the water supply plate may be arranged to be in contact with each other. The light guide plate may be inclined so as to be gradually inclined inward toward a lower side.

The water supply plate may include an edge protrusion protruding downward from an edge of the water supply plate. The light guide plate may include an upward protruding portion, extension, or projection protruding upward at a position spaced inward from an upper outer circumference of the light guide plate. The inner surface of the edge protrusion and the outer surface of the upward protruding portion can contact each other. The edge protrusion may be inclined so that an outer surface gradually inclines inward toward a lower side.

A partition plate may partition the water tank and the illumination assembly. The partition plate can be coupled to a lower side of illumination assembly. The illumination assembly may include a light support on which the light device is installed. The light support may be provided inside the light guide plate. The light support can be placed on the partition plate. The light device may be installed on an outer surface of the light support.

A water guide or receiver may include a drain or drainage passage to discharge water falling from the water supply plate into the water tank. The water guide may include an outer guide wall formed to be inclined outward toward an upper side. The water guide may include an inner guide wall spaced inwardly from the outer wall. The drainage passage may be formed between the outer guide wall and the inner guide wall.

The water guide may be spaced apart from the water supply plate in the downward direction. The illumination assembly may be provided between the water supply plate and the water guide. The light guide plate may be provided between the water supply plate and the water guide. The outer wall may be placed in the water tank. The light guide plate may be placed on an inner side wall. The outer wall may be positioned lower than an upper end of the water supply plate and the light guide plate.

The illumination assembly may be installed between the water tank and the water supply unit, and water falling down from the water supply unit may be illuminated so that the pet can drink water while being curious and interested. The illumination assembly may include an organic light emitting diode (OLED), which is advantageous in relieving the seasonal depression of the pet due to lack of going out.

The illumination assembly may be installed below the water supply unit where the water is supplied, so that glare can be alleviated when the pet is drinking water. Further, the organic light emitting diode (OLED) can emit light having a spectrum similar to that of natural light. The light emitted by the organic light emitting diode (OLED) may emit less blue light having a shorter wavelength that is harmful to the eyeball. There is also an advantage in protecting the eyes of pets.

The illumination assembly may be provided lower than the water supply unit so that the glare of the pet is alleviated. At the same time, illumination assembly may be arranged higher than the water tank, and light can be irradiated to the pet to alleviate the seasonal depression. Further, the pet water dispenser can function as a lighting device or lamp.

Light irradiated by the organic light emitting diode (OLED) may have less blue light which interferes with melatonin production and obscures sleep. There is also an advantage that insomnia can be prevented or reduced from the illumination device. Heat generated by the organic light emitting diode (OLED) lighting can be minimized. Accordingly, there is also an advantage that the temperature of the water controlled by the pet can be prevented from rising due to the illumination assembly.

The illumination assembly may be provided on the lower side of the water supply plate, so that even if the water supply plate is arranged above the water tank, it can be stably supported. Further, there is an advantage that the water supply plate can be stably supported even if an external force is applied by providing the light guide plate of the illumination assembly in contact with a longest edge of the water supply plate.

The effects of the present disclosure are not limited to the effects mentioned above, and other effects not mentioned can be clearly understood by those skilled in the art from the description of the claims.

It will be understood that when an element or layer is referred to as being "on" another element or layer, the element or layer can be directly on another element or layer or intervening elements or layers. In contrast, when an element is referred to as being "directly on" another element or layer, there are no intervening elements or layers present. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section could be termed a second element, component, region, layer or section without departing from the teachings of the present invention.

Spatially relative terms, such as "lower", "upper" and the like, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "lower" relative to other elements or features would then be oriented "upper" relative to the other elements or features. Thus, the exemplary term "lower" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Embodiments of the disclosure are described herein with reference to cross-section illustrations that are schematic illustrations of idealized embodiments (and intermediate structures) of the disclosure. As such, variations from the shapes of the illustrations as a result, for example, of manufacturing techniques and/or tolerances, are to be expected. Thus, embodiments of the disclosure should not be construed as limited to the particular shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the scope of the appended claims. More particularly, various variations and modifications are possible in the component parts and/or arrangements of the subject combination arrangement within the scope of the appended claims. In addition to variations and modifications in the component parts and/or arrangements, alternative uses will also be apparent to those skilled in the art.

## Claims

1. A liquid dispenser to supply liquid to a pet, including:
a tank (10);
a pump (20) provided inside the tank (10) to pump liquid;
a pipe (25) connected to the pump (20);
a plate (30) provided above the tank (10) and having a hole (32) communicating with the pipe (25) to supply liquid from the pipe (25) to the plate (30); and
an illumination assembly (60) provided between the tank (10) and the plate (30), wherein the illumination assembly (60) has a horizontal dimension smaller than a horizontal dimension of the plate (30) and includes a light device (61) to illuminate liquid falling from the plate (30),
said liquid dispenser being **characterized in that** the illumination assembly (60) includes a light support (62) provided below the plate (30) and having a ring shape, and the light device (61) is installed on an upper outer surface of the light support (62).

2. The liquid dispenser of claim 1, wherein the plate (30) has an upper surface (31) over which water supplied through the hole (32) flows toward an edge of the plate (30), and wherein the edge is curved.

3. The liquid dispenser of claim 1 or 2, wherein the illumination assembly (60) comprises at least one organic light emitting diode (OLED).

4. The liquid dispenser of claim 3, wherein the OLED is formed in a ring shape.

5. The liquid dispenser of any one of the preceding claims, further including a controller (C) to control an operation of the pump (20) and the illumination assembly (60).

6. The liquid dispenser of claim 5, wherein the controller (C) is configured to turn on the light device (61) of the illumination assembly (60) when a pump (20) is operated, and to turn off the light device (61) when an operation of the pump (20) is stopped.

7. The liquid dispenser of any one of the preceding claims, further including a plurality of proximity sensors (87) to sense a position of a pet within a predetermined distance range, wherein the plurality of proximity sensors (87) are installed apart from each other along a periphery of the liquid dispenser.

8. The liquid dispenser of claim 7, wherein the controller (C) is configured to turn on the light device (61) when at least one of the plurality of proximity sensors (87) senses the pet to be within the predetermined distance range, and to turn off the light device (61) when the plurality of proximity sensors (87) do not sense the pet within the predetermined distance range for more than a predetermined time period during an operation of the light device (61).

9. The liquid dispenser of any one of the preceding claims, wherein the illumination assembly (60) includes a light diffuser (63) forming an outer surface of the illumination assembly (60).

10. The liquid dispenser of claim 9, wherein a shape of an upper end of the light diffuser (63) corresponds to a shape of a lower surface of the plate (30) below the edge, and wherein the edge of the plate (30) is provided on the upper end of the light diffuser (63) .

11. The liquid dispenser of claim 9 or 10,
wherein the plate (30) includes an edge projection (312) protruding downward from an edge of the plate (30), wherein the light diffuser (63) includes a projection (63a1) protruding upward from the upper end of the light diffuser (63) at a position spaced inward from an outer surface of the light diffuser (63), and wherein the edge projection (312) is inclined inward from an upper end of the edge projection (312) toward a lower end of the edge projection (312), and wherein an inner surface of the edge projection (312) and an outer surface of the projection (63a1) are provided adjacent to and contact each other.

12. The liquid dispenser of any one of claims 9 to 11, wherein the light diffuser (63) is inclined inward from the upper end to a lower end of the light diffuser (63).

13. The liquid dispenser of any one of the preceding claims, further including a partition plate (65) to partition the tank (10) from the illumination assembly (60), wherein the partition plate (65) is coupled to a lower side of the illumination assembly (60).

14. The liquid dispenser of claim 13 insofar as dependent on claim 9, wherein the light support (62) is provided on an inner side of the light diffuser (63) and provided on the partition plate (65), and wherein the light device (61) is installed on an outer surface of the light support (62).

15. The liquid dispenser of any one of claims 9 to 14, further including a liquid guide (50) provided below and spaced apart from the plate (30), and wherein the liquid guide (50) is formed with a drain passage (521) to discharge liquid falling from the plate (30) into the tank (10), and wherein the liquid guide (50) further includes:
an outer wall (51) which is inclined outward toward from a bottom end of the outer wall (51) toward an upper end of the outer wall (51), wherein the outer wall (51) is provided on the tank (10); and
an inner wall (53) provided at an inner side of the outer wall (51), wherein the drain passage (521) is formed between the inner wall (53) and the outer wall (51),
wherein the light diffuser (63) is provided on the inner wall (53), and
wherein the outer wall (51) is lower than an upper end of the plate (30) and the light diffuser (63).

## Patentansprüche

1. Flüssigkeitsspender, um einem Haustier Flüssigkeit zuzuführen, der aufweist:
einen Behälter (10);
eine Pumpe (20), die innerhalb des Behälters (10) vorgesehen ist, um Flüssigkeit zu pumpen;
ein Rohr (25), das mit der Pumpe (20) verbunden ist,
eine Platte (30), die über dem Behälter (10) vorgesehen ist und ein Loch (32) aufweist,
das mit dem Rohr (25) in Verbindung steht, um der Platte (30) Flüssigkeit aus dem Rohr (25) zuzuführen, und
eine Beleuchtungsanordnung (60), die zwischen dem Behälter (10) und der Platte (30) vorgesehen ist, wobei die Beleuchtungsanordnung (60) eine horizontale Abmessung aufweist, die kleiner als eine horizontale Abmessung der Platte (30) ist, und eine Lichtvorrichtung (61) enthält, um von der Platte (30) herabfallende Flüssigkeit zu beleuchten,
wobei der Flüssigkeitsspender **dadurch gekennzeichnet ist, dass** die Beleuchtungsanordnung (60) einen Lichtträger (62) umfasst, der unter der Platte (30) vorgesehen ist und eine Ringform aufweist, und die Lichtvorrichtung (61) an einer oberen Außenfläche des Lichtträgers (62) installiert ist.

2. Flüssigkeitsspender nach Anspruch 1, wobei die Platte (30) eine obere Fläche (31) aufweist, über die das durch das Loch (32) zugeführte Wasser zu einem Rand der Platte (30) fließt, und wobei der Rand gekrümmt ist.

3. Flüssigkeitsspender nach Anspruch 1 oder 2, wobei die Beleuchtungsanordnung (60) mindestens eine organische Leuchtdiode (OLED) aufweist.

4. Flüssigkeitsspender nach Anspruch 3, wobei die OLED in einer Ringform ausgebildet ist.

5. Flüssigkeitsspender nach einem der vorhergehenden Ansprüche, der ferner eine Steuerung (C) zur Steuerung des Betriebs der Pumpe (20) und der Beleuchtungsanordnung (60) aufweist.

6. Flüssigkeitsspender nach Anspruch 5, wobei die Steuerung (C) konfiguriert ist, die Lichtvorrichtung (61) der Beleuchtungsanordnung (60) einzuschalten, wenn eine Pumpe (20) betrieben wird, und die Lichtvorrichtung (61) auszuschalten, wenn ein Betrieb der Pumpe (20) gestoppt wird.

7. Flüssigkeitsspender nach einem der vorhergehenden Ansprüche, der ferner mehrere Näherungssensoren (87) enthält, um eine Position eines Haustieres innerhalb eines vorbestimmten Entfernungsbereichs zu erfassen, wobei die mehreren Näherungssensoren (87) voneinander getrennt entlang eines Umfangs des Flüssigkeitsspenders installiert sind.

8. Flüssigkeitsspender nach Anspruch 7, wobei die Steuerung (C) konfiguriert ist, die Lichtvorrichtung (61) einzuschalten, wenn mindestens einer der mehreren Näherungssensoren (87) erfasst, dass sich das Haustier innerhalb des vorbestimmten Entfernungsbereichs befindet, und die Lichtvorrichtung (61) auszuschalten, wenn die mehreren Näherungssensoren (87) das Haustier innerhalb des vorbestimmten Entfernungsbereichs für mehr als eine vorbestimmte Zeitspanne während eines Betriebs der Lichtvorrichtung (61) nicht erfassen.

9. Flüssigkeitsspender nach einem der vorhergehenden Ansprüche, wobei die Beleuchtungsanordnung (60) einen Lichtdiffusor (63) aufweist, der eine Außenfläche der Beleuchtungsanordnung (60) bildet.

10. Flüssigkeitsspender nach Anspruch 9, wobei eine Form eines oberen Endes des Lichtdiffusors (63) einer Form einer unteren Fläche der Platte (30) unter dem Rand entspricht und wobei der Rand der Platte (30) am oberen Ende des Lichtdiffusors (63) vorgesehen ist.

11. Flüssigkeitsspender nach Anspruch 9 oder 10, wobei die Platte (30) einen Kantenvorsprung (312) aufweist, der von einer Kante der Platte (30) nach unten vorsteht, wobei der Lichtdiffusor (63) einen Vorsprung (63a1) aufweist, der von dem oberen Ende des Lichtdiffusors (63) an einer Position nach innen beabstandet von einer Außenfläche des Lichtdiffusors (63) nach oben vorsteht, und wobei der Kantenvorsprung (312) von einem oberen Ende des Kantenvorsprungs (312) zu einem unteren Ende des Kantenvorsprungs (312) nach innen geneigt ist, und wobei eine Innenfläche des Kantenvorsprungs (312) und eine Außenfläche des Vorsprungs (63a1) benachbart zueinander vorgesehen sind und einander berühren.

12. Flüssigkeitsspender nach einem der Ansprüche 9 bis 11, wobei der Lichtdiffusor (63) vom oberen Ende zu einem unteren Ende des Lichtdiffusors (63) nach innen geneigt ist.

13. Flüssigkeitsspender nach einem der vorangehenden Ansprüche, der ferner eine Trennplatte (65) aufweist, um den Behälter (10) von der Beleuchtungsanordnung (60) zu trennen, wobei die Trennplatte (65) mit einer unteren Seite der Beleuchtungsanordnung (60) gekoppelt ist.

14. Flüssigkeitsspender nach Anspruch 13 insofern als von Anspruch 9 abhängig, wobei der Lichtträger (62) an einer Innenseite des Lichtdiffusors (63) vorgesehen ist und an der Trennplatte (65) vorgesehen ist, und wobei die Lichtvorrichtung (61) an einer Außenfläche des Lichtträgers (62) installiert ist.

15. Flüssigkeitsspender nach einem der Ansprüche 9 bis 14, der ferner eine Flüssigkeitsführung (50) aufweist, die unter der Platte (30) vorgesehen und von dieser beabstandet ist, und wobei die Flüssigkeitsführung (50) mit einem Ablaufkanal (521) ausgebildet ist, um von der Platte (30) herabfallende Flüssigkeit in den Behälter (10) abzuleiten, und wobei die Flüssigkeitsführung (50) ferner aufweist:
eine Außenwand (51), die von einem unteren Ende der Außenwand (51) zu einem oberen Ende der Außenwand (51) hin nach außen geneigt ist, wobei die Außenwand (51) am Behälter (10) vorgesehen ist, und
eine Innenwand (53), die an einer Innenseite der Außenwand (51) vorgesehen ist, wobei der Ablaufkanal (521) zwischen der Innenwand (53) und der Außenwand (51) ausgebildet ist,
wobei der Lichtdiffusor (63) an der Innenwand (53) vorgesehen ist, und
wobei die Außenwand (51) niedriger ist als ein oberes Ende der Platte (30) und des Lichtdiffusors (63).

## Revendications

1. Distributeur de liquide fournissant un liquide à un animal domestique, comprenant :
un réservoir (10) ;
une pompe (20) prévue à l'intérieur du réservoir (10) pour pomper le liquide ;
une conduite (25) reliée à la pompe (20) ;
une plaque (30) prévue au-dessus du réservoir (10) et comportant un trou (32) communiquant avec la conduite (25) afin d'acheminer le liquide de la conduite (25) vers la plaque (30) ; et
un ensemble d'éclairage (60) placé entre le réservoir (10) et la plaque (30), ledit ensemble d'éclairage (60) ayant une dimension horizontale inférieure à la dimension horizontale de la plaque (30) et comprenant un dispositif lumineux (61) pour éclairer le liquide chutant de la plaque (30),
ledit distributeur de liquide étant **caractérisé en ce que** l'ensemble d'éclairage (60) comprend un support de lumière (62) prévu sous la plaque (30) et présentant une forme annulaire, et **en ce que** le dispositif lumineux (61) est installé sur une surface supérieure extérieure du support de lumière (62).

2. Distributeur de liquide selon la revendication 1, où la plaque (30) a une surface supérieure (31) sur laquelle l'eau refoulée par le trou (32) s'écoule vers un bord de ladite plaque (30), et où le bord est coudé.

3. Distributeur de liquide selon la revendication 1 ou la revendication 2, où l'ensemble d'éclairage (60) comprend au moins une diode électroluminescente organique (OLED).

4. Distributeur de liquide selon la revendication 3, où l'OLED présente une forme annulaire.

5. Distributeur de liquide selon l'une des revendications précédentes, comprenant en outre un contrôleur (C) pour commander le fonctionnement de la pompe (20) et de l'ensemble d'éclairage (60).

6. Distributeur de liquide selon la revendication 5, où le contrôleur (C) est prévu pour allumer le dispositif lumineux (61) de l'ensemble d'éclairage (60) lorsqu'une pompe (20) est actionnée, et pour éteindre le dispositif lumineux (61) lorsque le fonctionnement de la pompe (20) est arrêté.

7. Distributeur de liquide selon l'une des revendications précédentes, comprenant en outre une pluralité de capteurs de proximité (87) pour détecter la position d'un animal domestique dans une plage de distance définie, la pluralité de capteurs de proximité (87) étant installés espacés les uns des autres le long de la périphérie du distributeur de liquide.

8. Distributeur de liquide selon la revendication 7, où le contrôleur (C) est prévu pour allumer le dispositif lumineux (61) lorsqu'au moins un des capteurs de proximité (87) détecte que l'animal se trouve dans la plage de distance définie, et pour éteindre le dispositif lumineux (61) lorsque la pluralité de capteurs de proximité (87) ne détecte pas l'animal dans la plage de distance définie au-delà d'une durée définie pendant le fonctionnement du dispositif lumineux (61).

9. Distributeur de liquide selon l'une des revendications précédentes, où l'ensemble d'éclairage (60) comprend un diffuseur de lumière (63) formant une surface extérieure de l'ensemble d'éclairage (60).

10. Distributeur de liquide selon la revendication 9, où la forme de l'extrémité supérieure du diffuseur de lumière (63) correspond à la forme de la surface inférieure de la plaque (30) en dessous du bord, et où le bord de la plaque (30) est prévu à l'extrémité supérieure du diffuseur de lumière (63).

11. Distributeur de liquide selon la revendication 9 ou la revendication 10, où la plaque (30) comprend une saillie de bord (312) s'étendant vers le bas depuis le bord de la plaque (30), où le diffuseur de lumière (63) comprend une saillie (63a1) s'étendant vers le haut depuis l'extrémité supérieure du diffuseur de lumière (63) à un emplacement espacé vers l'intérieur de la surface extérieure du diffuseur de lumière (63), et où la saillie de bord (312) est inclinée vers l'intérieur depuis une extrémité supérieure de la saillie de bord (312) vers une extrémité inférieure de la saillie de bord (312), et où une surface intérieure de la saillie de bord (312) et une surface extérieure de la saillie (63a1) sont adjacentes l'une à l'autre et se contactent.

12. Distributeur de liquide selon l'une des revendications 9 à 11, où le diffuseur de lumière (63) est incliné vers l'intérieur de l'extrémité supérieure à l'extrémité inférieure du diffuseur de lumière (63).

13. Distributeur de liquide selon l'une des revendications précédentes, comprenant en outre une plaque de séparation (65) pour séparer le réservoir (10) de l'ensemble d'éclairage (60), ladite plaque de séparation (65) étant raccordée à un côté inférieur de l'ensemble d'éclairage (60).

14. Distributeur de liquide selon la revendication 13, si dépendante de la revendication 9, où le support de lumière (62) est prévu sur un côté intérieur du diffuseur de lumière (63) et sur la plaque de séparation (65), et où le dispositif lumineux (61) est installé sur une surface extérieure du support de lumière (62).

15. Distributeur de liquide selon l'une des revendications 9 à 14, comprenant en outre un guide de liquide (50) situé sous la plaque (30) et espacé de celle-ci, et où ledit guide de liquide (50) est formé avec un passage de vidange (521) pour évacuer le liquide tombant de la plaque (30) dans le réservoir (10), ledit guide de liquide (50) comprenant en outre :
une paroi extérieure (51) inclinée vers l'extérieur, depuis une extrémité inférieure de ladite paroi extérieure (51) vers une extrémité supérieure de ladite paroi extérieure (51), ladite paroi extérieure (51) étant prévue sur le réservoir (10) ; et
une paroi intérieure (53) prévue sur un côté intérieur de la paroi extérieure (51), le passage de vidange (521) étant formé entre la paroi intérieure (53) et la paroi extérieure (51),
où le diffuseur de lumière (63) est prévu sur la paroi intérieure (53), et
où la paroi extérieure (51) est en dessous d'une extrémité supérieure de la plaque (30) et du diffuseur de lumière (63).
